Europäisches Patentamt

European Patent Office

Office européen des brevets

(19)

(11) Publication number: **0 135 303**
**B1**

(12) **EUROPEAN PATENT SPECIFICATION**

(45) Date of publication of patent specification: **02.11.88**

(51) Int. Cl.⁴: **G 01 N 21/03**

(21) Application number: **84304977.6**

(22) Date of filing: **20.07.84**

(54) Set of cuvettes.

(30) Priority: **24.08.83 FI 833033**

(43) Date of publication of application:
**27.03.85 Bulletin 85/13**

(45) Publication of the grant of the patent:
**02.11.88 Bulletin 88/44**

(84) Designated Contracting States:
**AT BE CH DE FR GB IT LI LU NL SE**

(56) References cited:
**WO-A-82/00359**
**WO-A-83/01111**
**WO-A-84/02775**
**CA-A-1 020 068**
**DE-A-2 904 597**
**DE-A-3 005 508**

**Dorland's Illustrated Medical Dictionary, 26th
ed., W.B. Saunders Comp., 1981, pp.
333,395,1028**

(73) Proprietor: **LABSYSTEMS OY
Pulttitie 9
SF-00810 Helsinki 81 (FI)**

(72) Inventor: **Ekholm, Pertti
Sammatintie 6 L 130
SF-00550 Helsinki (FI)**
Inventor: **Kaukanen, Esko
Akselinpolku 7 D 20
SF-02230 Espoo 32 (FI)**
Inventor: **Suovaniemi, Osmo
Kulopolku 6
SF-00570 Helsinki (FI)**
Inventor: **Partanen, Paul
Paijutie 26 B 4
SF-00980 Helsinki 98 (FI)**

(74) Representative: **Freed, Arthur Woolf et al
Reginald W. Barker & Co. 13 Charterhouse
Square
London EC1M 6BA (GB)**

Courier Press, Leamington Spa, England.

## Description

The present invention concerns a set of cuvettes in which liquid samples may be placed, for instance to be analyzed in a photometer.

In prior art, sets of cuvettes are known in which the cuvettes are located in one plane and constitute a set of rows having rectangular shape. It has now been understood that when the cuvettes are so disposed that they constitute a hexagonal grid, certain advantages are gained over previous types of apparatus.

CA—A—1020068 discloses a set of petri plates arranged in a hexagonal grid and in a single horizontal plane.

According to the present invention, there is provided a set of cuvettes for samples, wherein the cuvettes are located in one horizontal plane and constitute a hexagonal grid, characterized in that in the partitions between cuvettes there is no air space, in that the grid has, in a grid position, a downward open depression, in that said depression is located in a marginal position of the grid, and in that said depression has the shape and size of a cuvette.

The set of cuvettes of the invention has a compact structure, whereby material is saved in manufacture. The close spacing of the cuvettes facilitates the measurements, in particular in a single-channel photometer with a movable measuring head. The set of cuvettes is also sturdy and it is not subject to distortion. The set of cuvettes is favourable as regards thermal properties in that the samples can be better held at the same temperature. The thermal characteristics is improved by providing in the grid, particularly in its marginal positions, downward open depressions instead of cuvettes.

A favourable embodiment of the invention, intended for a photometer is more closely illustrated with the aid of the accompanying drawings.

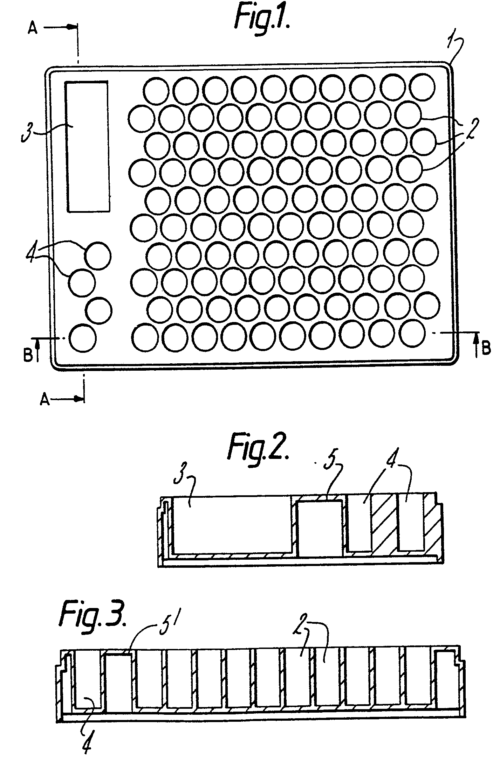

Fig. 1 represents the set of cuvettes in top view, and

Figs. 2 and 3 display the cross section and longitudinal section of the same set of cuvettes.

The set of cuvettes consists of depressions 2 with the shape of circular cylinders, provided in the form of a plate 1, and which constitute a hexagonal grid.

Furthermore, there is a basin 3 outside the grid. The basin may be used for storage of a dry or wet reagent. It may alternatively be used to the purpose of cleaning the liquid dosing tip, by placing in it a washing liquid or, for instance, a paper membrane, the tip being cleaned by perforating the membrane with it. It is also possible to place in the basin a code serving identification of the set of cuvettes and which may be read with the measuring head of the photometer.

The plate furthermore has separate cuvettes 4 for standard or blank samples. Hereby these samples will not occupy any locations or location numbers needed for the samples proper.

In the sectional drawings are furthermore seen the downward open depressions 5 and 5′ provided in grid positions.

The set of cuvettes is best made of polystyrene by a die casting process.

## Claims

1. A set of cuvettes for samples, wherein the cuvettes (2) are located in one horizontal plane and constitute a hexagonal grid, characterized in that in the partitions between cuvettes (2) there is no air space, in that the grid has, in a grid position, a downward open depression (5, 5′), in that said depression (5, 5′) is located in a marginal position of the grid, and in that said depression (5, 5′) has the shape and size of a cuvette.

2. A set of cuvettes according to claim 1, characterized in that the set of cuvettes (2) has outside the grid a fixed basin (3) which has a size different from that of the cuvettes (2).

## Patentansprüche

1. Küvettensatz für Proben, wobei die Küvetten (2) in einer horizontalen Ebene angeordnet sind und ein hexagonales Gitter bilden, dadurch gekennzeichnet, daß in den Trennbereichen zwischen Küvetten (2) kein Luftraum gegeben ist, in dem das Gitter in einer Gitterlage eine nach unten offene Vertiefung (5, 5′) hat, daß die Vertiefung (5, 5′) in einem Randbereich des Gitters angeordnet ist und daß die Vertiefung (5, 5′) die Form und Größe einer Küvette hat.

2. Küvettensatz nach Anspruch 1, dadurch gekennzeichnet, daß der Satz der Küvetten (2) außerhalb des Gitters einen festen Raum (3) hat, der eine von jener der Küvetten (2) verschiedene Größe hat.

## Revendications

1. Jeu de coupelles pour échantillons, dans lequel les coupelles (2) sont disposées dans un unique plan horizontal et constituent une grille hexagonale, caractérisé par le fait qu'à l'intérieur des cloisons entre les coupelles (2) il n'y a pas d'espace d'air, que la grille comprend, dans une position de grille, une dépression ouverte vers le bas (5, 5′), que ladite dépression (5, 5′) est disposée dans une position marginale de la grille, et que ladite dépression (5, 5′) a la forme et la dimension d'une coupelle.

2. Jeu de coupelles selon la revendication 1, caractérisé par le fait que le jeu de coupelles (2) comporte à l'extérieur de la grille, une cuve fixe (3) qui a une dimension différente de celle des coupelles (2).

## Fig.1.

## Fig.2.

## Fig.3.